# EUROPÄISCHE PATENTSCHRIFT

(11) **EP 2 532 588 B1**
(45) Veröffentlichungstag und Bekanntmachung des Hinweises auf die Patenterteilung: **29.06.2016**
(21) Anmeldenummer: 12004166.0
(22) Anmeldetag: 31.05.2012
(51) Int. Cl.: B64D 7/00, B64C 1/00, B64C 39/02

(54) **Getarntes Fluggerät**
Camouflaged aircraft
Aéronef camouflé

(30) Priorität: 08.06.2011 DE 102011106348
(43) Veröffentlichungstag der Anmeldung: 12.12.2012
(73) Patentinhaber: Airbus Defence and Space GmbH, 85521 Ottobrunn (DE)
(72) Erfinder: Dornwald, Jochen, 80807 München (DE); Bichler, Bartholomäus, 83064 Raubling (DE)
(74) Vertreter: Kopf Westenberger Wachenhausen Patentanwälte PartG mbB

(56) Entgegenhaltungen:
- US-A- 6 129 308
- Koalorka: "F-117 Nighthawk Front", , 10. Februar 2008 (2008-02-10), XP55036302, Gefunden im Internet: URL:http://en.wikipedia.org/wiki/File:F-11 7_Nighthawk_Front.jpg [gefunden am 2012-08-24]
- Benni J. Davis: "B-2 Spirit Original", , 7. Februar 2007 (2007-02-07), XP55036301, Gefunden im Internet: URL:http://en.wikipedia.org/wiki/File:B-2_ Spirit_original.jpg [gefunden am 2012-08-24]
- MOXON J: "DASSAULT UNVEILS STEALTHY UCAV", FLIGHT INTERNATIONAL, REED BUSINESS INFORMATION, SUTTON SURREY, GB, Bd. 158, Nr. 4750, 10. Oktober 2000 (2000-10-10), Seite 8, XP000965826, ISSN: 0015-3710

## Beschreibung

### GEBIET DER ERFINDUNG

Die Erfindung betrifft ein Fluggerät, insbesondere ein getarntes Flugzeug, und ein Verfahren zum Betrieb eines Fluggeräts.

### HINTERGRUND DER ERFINDUNG

Flugzeuge und andere Fluggeräte werden häufig mit Radaranlagen überwacht. Um dieser Überwachung zu entgehen, wurden Fluggeräte mit niedriger Radarsignatur entwickelt, d.h. Fluggeräte die beispielsweise Radarstrahlen nur gering in die Richtung der Radaranlage zurückstrahlen.

Eine niedrige Radarsignatur, gleichbedeutend mit einer niedrigen Wahrscheinlichkeit für die Entdeckung des Fluggeräts mittels Radar, kann beispielsweise durch energieabsorbierende Anstriche, energieleitende Abdichtungen von Außenhautfugen, weniger und größere statt vieler kleiner Wartungsklappen, Unterbringen von Lasten in innenliegenden Schächten anstatt Außenlasten bewerkstelligt oder zumindest gefördert werden.

90% der Verbesserung d.h. der Verminderung der Radarsignatur eines Fluggeräts findet im Moment durch Verbesserung der Geometrie des Fluggeräts satt. Dies kann beispielsweise durch Verminderung von Kantenreflexen erfolgen, in dem die Kanten beispielsweise parallelisiert werden.

Beispiele für getarnte Fluggeräte mit extrem niedriger Radarsignatur sind der strategische Langstreckenbomber Northtrop B-2, sowie das Kampfflugzeug Lockheed F-117. Sie stellen den nächstliegenden Stand der Technik dar und offenbaren den Oberbegriff des Anspruchs 1. Zudem bekannt sind die unbemannten Flugzeuge Boeing X-45 und Northtrop X-47.

Bei Fluggeräten mit extrem niedriger Radarsignatur können jegliche Störungen auf der Flugzeugoberfläche unerwünschte Radarrückstreuungen erzeugen. Zu diesen Störungen können insbesondere Triebwerkseinläufe und -düsen, sowie Fahrwerks- und Waffenschachttore zählen, deren Tarnung selbst im geschlossenen Zustand mit erheblichen Aufwand verbunden sein kann.

### ZUSAMMENFASSUNG DER ERFINDUNG

Es ist Aufgabe der Erfindung ein Fluggerät zu schaffen, das durch Radarstrahlen besonders schlecht enttarnt werden kann.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Fluggerät gemäß des ersten Anspruchs. Das Fluggerät kann beispielsweise ein bemanntes Flugzeug oder ein UAV ("unmanned air vehicle"), d.h. ein unbemanntes Fluggerät sein.

Gemäß der Erfindung umfasst das Fluggerät wenigstens eine Turbine bzw. wenigstens ein Triebwerk zum Antrieb des Fluggeräts. Die Turbine weist dabei wenigstens eine Turbinenöffnung auf. Beispielsweise kann die Turbine wenigstens einen Lufteinlauf und wenigstens eine Düsenöffnung umfassen.

Darüber hinaus umfasst das Fluggerät wenigstens einen Schacht oder eine Mehrzahl von Schächten. Durch den oder die Schächte sind weitere Komponenten des Fluggeräts in das Innere des Fluggeräts verbringbar. Diese Komponenten können ein Fahrwerk, eine Nutzlast, eine Waffe oder einen abwerfbaren Flugkörper, wie etwa eine Bombe, umfassen. Unter einem Schacht kann dabei eine (verschließbare) Öffnung im Fluggerät verstanden werden, die beispielsweise mit einer Klappe bzw. einem Tor verschlossen werden kann. Ein Schacht kann also mit einer Klappe verschließbar sein. Derartige Schächte können einen Fahrwerksschacht, einen Nutzlastschacht oder einen Waffenschacht umfassen.

Gemäß der Erfindung ist das Fluggerät derart ausgeführt, dass es eine geringe Radarsignatur aufweist. Unter Radarsignatur kann dabei die Eigenschaft des Fluggeräts verstanden werden, aus einer Richtung auftreffende Radarstrahlung in die gleiche Richtung zurückzuwerfen. Die Radarsignatur kann auch mit dem Radarquerschnitt (RCS, "radar cross section") beschrieben werden. Ein niedriger Radarquerschnitt bedeutet dabei eine schlechte Detektierbarkeit mit Radarstrahlen.

Wenn im Folgenden und im Vorstehenden von Tarnung bzw. einer getarnten Fläche bzw. getarnten Seite die Rede ist, kann darunter verstanden werden, dass die betreffende Fläche eine geringe Radarsignatur aufweist. Wie bereits weiter oben ausgeführt kann eine geringe Radarsignatur über die Geometrie des Fluggeräts und über ein auf die Oberfläche aufgetragenes radarabsorbierendes Material, wie etwa einen Anstrich, erreicht werden. Mit anderen Worten kann das Fluggerät ein bezüglich Radarstrahlen getarntes Fluggerät sein.

Gemäß der Erfindung sind die wenigstens eine Turbinenöffnung und der wenigstens eine Schacht auf einer ersten Seite des Fluggeräts angeordnet sind, wobei eine zweite Seite des Fluggeräts derart ausgeführt ist, dass sie eine geringere Radarsignatur als die erste Seite aufweist. Beispielsweise können sich alle Öffnungen und Schächte auf der ersten Seite befinden und die zweite Seite kann frei von Öffnungen und Schächten sein. Auf diese Weise kann die zweite Seite optimal getarnt werden.

Unter der Prämisse, dass das Fluggerät in der Regel die zweite (hochgetarnte) Seite einer Bedrohung zuwendet, ist es nicht notwendig, dass die erste Seite genauso stark getarnt ist. Auf diese Weise kann auf eine hohe Tarnung der Öffnungen und Schächte verzichtet werden.

Durch Positionierung von Störquellen, wie etwa Öffnungen und Schächten, auf der der Bedrohung abgewandten Seite kann erreicht werden, dass diese Störquellen nicht mehr unmittelbar der Radarstrahlung aus Richtung der Bedrohung ausgesetzt sind und damit nicht mehr extrem aufwendig getarnt sein müssen. Mit anderen Worten können alle oder vieler RCS-schädliche Öffnungen auf einer Seite des Fluggeräts positioniert werden, um eine Radarsignatur bei Fluggeräten mit extrem niedriger Signatur weiter zu minimieren.

Durch konfigurative Optimierung von Störquellen, d.h. von Öffnungen und Schächten, des Fluggeräts kann somit dessen Radarsignatur in eine bestimmte Richtung optimiert werden.

Gemäß einer Ausführungsform der Erfindung weist die zweite Seite eine im wesentlichen ungestörte bzw. glatte Oberfläche aufweist. Insbesondere kann die zweite Seite ohne Vertiefungen, Erhöhungen und Kanten ausgestaltet sein. Auf diese Weise kann eine "saubere", besonders gut getarnte (zweite) Seite ohne Störungen der Oberfläche geschaffen werden. Dies kann konfigurativ dadurch erreicht werden, dass insbesondere im Flug offene oder zu öffnende Hohlräume, wie Einläufe, Düsen, Fahrwerksschächte und/oder Waffenschächte auf der gegenüberliegenden (ersten) Seite positioniert sind. Das Fluggerät kann somit durch wahlfreie Fluglage immer die saubere, zweite Seite zur Bedrohung durch Radar (beispielsweise Bodenradar) hin ausrichten und so die Tarneigenschaften optimieren. Der Aufwand zur Minimierung der Radarrückstreuung durch sekundäre Streuzentren, wie beispielsweise Öffnungen und Schächte, kann also reduziert werden, in dem diese Streuzentren auf der ersten Seiten des Fluggeräts angeordnet werden.

Gemäß der Erfindung weist die zweite Seite keine Schächte auf. Wenn beispielsweise die Fahrwerksschächte und die Nutzlast- oder Waffenschächte auf der gleichen (ersten) Seite wie die Triebwerksöffnungen angeordnet sind, ist die zweite Seite relativ frei von größeren Öffnungen und kann somit besonders leicht getarnt werden.

Gemäß einer Ausführungsform der Erfindung weist die erste Seite alle Schächte und Öffnungen auf. Auf diese Weise ist es möglich, dass die erste Seite keinerlei Öffnungen mehr aufweist, die getarnt werden müssten.

Gemäß einer Ausführungsform der Erfindung ist ein Schacht ein Fahrwerksschacht oder ein Nutzlastschacht. Beispielsweise können alle Fahrwerksschächte auf der ersten Seite angebracht sein, auf der sich auch die Triebwerksöffnungen befinden. Auch alle Nutzlast- bzw. Waffenschächte können sich auf der ersten Seite befinden. Insbesondere können die Fahrwerkschächte, Nutzlastschächte und/oder Waffenschächte auf der Oberseite des Fluggeräts angebracht sein. Dies kann bedeuten, dass sich das Fluggerät zum Abwerfen der Nutzlast, zum Benutzen der Waffe, zum Landen oder zum Starten umdrehen muss.

Gemäß einer Ausführungsform der Erfindung ist die erste Seite eine Oberseite des Fluggeräts und/oder ist die zweite Seite eine Unterseite des Fluggeräts. Das Fluggerät kann beispielsweise ein flacher Flugkörper sein, der sich wesentlich weiter in Längs- und Querrichtung erstreckt als in einer Höhenrichtung. Dann können die erste Seite und die zweite Seite jeweils entweder die Ober- und die Unterseite des Fluggeräts sein. Die Ober- bzw. Unterseite des Fluggeräts kann dabei durch die Orientierung des Piloten oder durch technische Einschränkungen wie etwa die bevorzugte Fluglage gekennzeichnet sein. Ist die erste Seite die Oberseite, kann beispielsweise der Pilot mit der getarnten zweiten Seite nach unten in aufrechter Position fliegen.

Gemäß einer Ausführungsform der Erfindung ist das Fluggerät dazu ausgeführt, bevorzugt in einer Fluglage zu fliegen, bei der die zweite Seite in eine Hauptbedrohungsrichtung ausgerichtet ist. Die Hauptbedrohungsrichtung kann beispielsweise durch ein Radargerät am Boden bestimmt sein, zeigt in diesem Fall also in Richtung Boden. Beispielsweise kann die aerodynamische Form des Fluggeräts so ausgeführt sein, dass es in der bevorzugten Fluglage den größten Auftrieb hat. Gemäß einer Ausführungsform der Erfindung kann aus einer Blickrichtung lediglich die zweite Seite des Fluggeräts erfasst werden. Mit anderen Worten verdeckt aus einer Blickrichtung die zweite Seite die erste Seite des Fluggeräts vollständig. Damit könnte ein Radargerät, dass in der Blickrichtung Radarstrahlen in Richtung des Fluggeräts sendet, nur die zweite Seite erfassen. Da die zweite Seite besonders gut getarnt ist, kann das Fluggerät für das Radargerät unsichtbar bleiben, obwohl es durchaus möglich sein kann, dass das Radargerät dazu in der Lage wäre, die erste Seite zu detektieren.

Die erste und die zweite Seite liegen einander gegenüber.

Auch ist es möglich, dass aus einer anderen Blickrichtung lediglich die erste Seite erfasst werden.

Gemäß einer Ausführungsform der Erfindung umfasst das Fluggerät ein Cockpit. Das Fluggerät kann also ein bemanntes Fluggerät sein. Das Cockpit kann an der ersten Seiten angeordnet sein. Auch ein Cockpit und insbesondere die Kuppel des Cockpits kann ungewünschte Radarsignaturen erzeugen. In diesem Fall kann es möglich sein, dass der Pilot während der Landung, dem Start und beim Benutzen der Nutzlast- oder Waffenschächte im Fluggerät auf dem Kopf steht.

Gemäß einer Ausführungsform der Erfindung ist das Fluggerät zum unbemannten Betrieb ausgeführt ist. Dazu benötigt das Fluggerät beispielsweise einen Bordcomputer der in der Lage ist, das Fluggerät selbständig zu fliegen. Die obenstehend und untenstehend beschriebenen Anordnungen von Öffnungen und Schächte können speziell für unbemannte Fluggeräte interessant sein, da hier keine Rücksicht auf die Physionomie des Piloten genommen werden muss.

Gemäß einer Ausführungsform der Erfindung ist das Fluggerät als Nurflügler ausgeführt. Ein Nurflügler-Fluggerät kann dabei ein Fluggerät sein, das einen Rumpf- und Tragflügelkorpus aufweist. Mit anderen Worten können bei einem Nurflügler-Fluggerät die Flügel optisch nicht vom Rumpf getrennt werden. Eine Nurflügel-Konfiguration, die besonders gut getarnt werden kann, mit einer ersten und zweiten Seite, so wie sie obenstehend und untenstehend beschrieben sind, kann beispielsweise gegen eine feindliche Luftverteidigung eingesetzt werden.

Ein weiterer Aspekt der Erfindung betrifft ein Verfahren gemäß des Anspruchs 13 zum Betrieb eines Fluggeräts so wie es obenstehend und untenstehend beschrieben ist.

Gemäß einer Ausführungsform der Erfindung umfasst das Verfahren die Schritte: Fliegen in einer Fluglage, in der eine zweite Seite des Fluggeräts in Richtung einer Bedrohung, beispielsweise nach unten, weist, wobei die zweite Seite einer ersten Seite des Fluggeräts gegenüberliegt, an der Düsenöffnungen und ein Nutzlastschacht des Fluggeräts angebracht sind; Wechseln in eine Fluglage, in der die ersten Seite in Richtung der Bedrohung weist; Abwerfen einer Nutzlast aus dem Nutzlastschacht. Vor dem Abwerfen der Nutzlast kann der Nutzlastschacht geöffnet werden. Nach dem Abwerfen der Nutzlast kann der Nutzlastschacht wieder geschlossen werden.

Anschließend kann das Fluggerät wieder in die Fluglage wechseln, in der die zweite Seite in Richtung der Bedrohung weist. Auf diese Weise ist die Radarsignatur des Fluggeräts während der meisten Zeit des Flugs in Richtung der Bedrohung sehr niedrig. Nur während des Abwerfens der Nutzlast dreht das Fluggerät seine erste Seite, die weniger stark als die zweite Seite getarnt sein kann, der Bedrohung zu.

Gemäß einer Ausführungsform der Erfindung umfasst das Verfahren die Schritte: Starten in der Fluglage, in der die erste Seite nach unten weist; Einziehen eines Fahrwerks in einen Fahrwerksschacht, der an der ersten Seite angebracht ist; Wechseln in die Fluglage, in der die zweite Seite in Richtung der Bedrohung weist; Wechseln in die Fluglage, in der die erste Seite nach unten weist; Ausfahren des Fahrwerks; Landen in der Fluglage, in der die erste Seite nach unten weist. Mit anderen Worten kann das Fluggerät dazu ausgeführt sein am Rücken zu landen und zu starten. Zum Landen und Starten kann das Fluggerät sich also in eine Fluglage drehen, bei der die Seite mit dem Fahrwerk nach unten (d.h. in Richtung des Bodens) zeigt. Beim Starten und Landen ist eine hohe Tarnung in der Regel nicht notwendig.

Im Folgenden werden Ausführungsbeispiele der Erfindung mit Bezug auf die beiliegenden Figuren detailliert beschrieben.

### KURZE BESCHREIBUNG DER FIGUREN

**Fig. 1** zeigt eine schematische Ansicht der ersten Seite eines Fluggeräts gemäß einer Ausführungsform der Erfindung.
**Fig. 2** zeigt eine schematische Ansicht auf eine Schmalseite des Fluggeräts aus der Fig. 1.
**Fig. 3** zeigt eine schematische Ansicht des Fluggeräts aus der Fig. 1 von vorne.
**Fig. 4** zeigt eine schematische Ansicht des Fluggeräts aus der Fig. 1 von schräg oben auf die erste Seite.
**Fig. 5** zeigt eine schematische Ansicht des Fluggeräts aus der Fig. 1 im Bodenbetrieb.
**Fig. 6** zeigt eine schematische Ansicht des Fluggeräts aus der Fig. 1 während des Starts.
**Fig. 7** zeigt eine schematische Ansicht des Fluggeräts aus der Fig. 1 in einer Reisefluglage.
**Fig. 8** zeigt eine schematische Ansicht des Fluggeräts aus der Fig. 1 mit geöffnetem Nutzlastschacht.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILIERTE BESCHREIBUNG VON AUSFÜHRUNGSBEISPIELEN

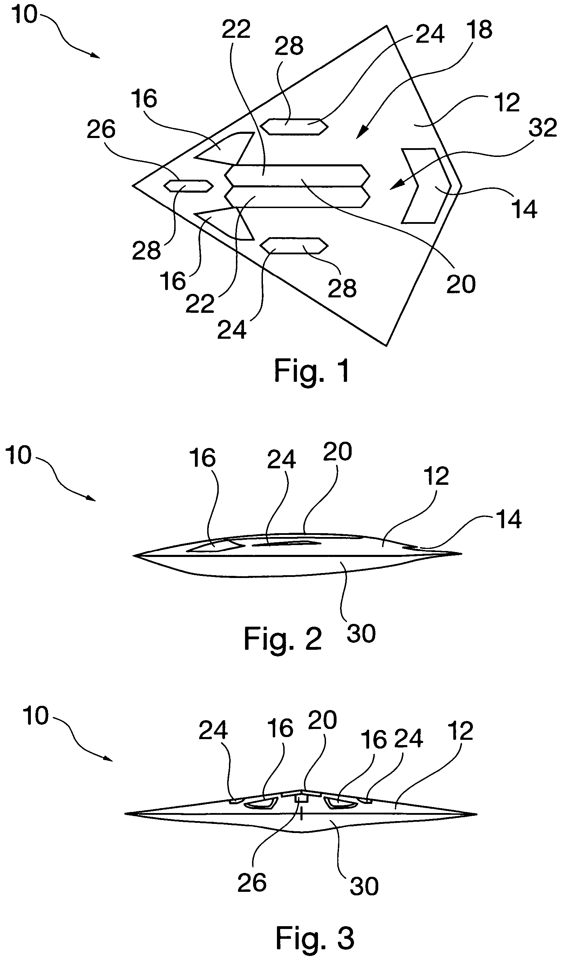

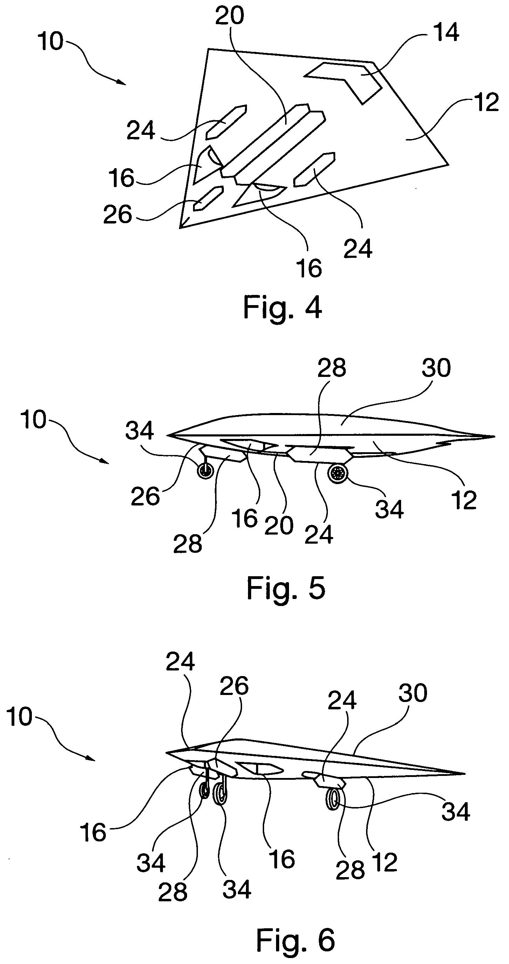

Die Fig. 1 bis 4 zeigen ein Fluggerät 10 aus verschiedenen Richtungen. In der Fig. 1 ist eine Ansicht mit Blick auf die erste Seite 12, in der Fig. 2 eine Ansicht mit Blick auf die Schmalseite, in der Fig. 3 eine Ansicht von vorne und in der Fig. 4 eine Ansicht von schräg oben auf die erste Seite 12 dargestellt.

Das Fluggerät 10 ist ein Nurflügler-Flugzeug mit einem im wesentlichen trapezförmigen Rumpf. Auf der ersten Seite 12 befindet sich am hinteren Ende eine Düsenöffnung 14 und am vorderen Ende zwei Einläufe 16, die symmetrisch zu einer Mittelachse des Fluggeräts 10 angeordnet sind. Zum Antrieb des Fluggeräts 10 befindet sich im Fluggerät 10 eine Turbine 18, die Luft durch die Einläufe 16 einziehen, verdichten und durch die Düsenöffnung 14 ausstoßen kann. Die Einläufe 16 und die Düsenöffnung 14 sind Turbinenöffnungen des Fluggeräts 10.

Auf der ersten Seite 12 befindet sich auch ein Nutzlastschacht 20, der durch zwei Klappen bzw. Tore 22 verschlossen ist. Der Nutzlastschacht ist symmetrisch zur Mittelachse und zwischen den Einläufen 16 und der Düsenöffnung 14 angeordnet. In Bezug auf die Mittelachse neben dem Nutzlastschacht 20 sind zwei Hauptfahrwerksschächte 24 und vor dem Nutzlastschacht 20 zwischen den beiden Einläufen 16 ist ein Bugfahrwerksschacht 26 angeordnet. Die Fahrwerksschächte 24 und 26 sind durch Klappen bzw. Tore 28 verschlossen.

In den Fig. 2 und 3 ist auch eine zweite Seite 30 des Fluggeräts 10 zu erkennen, die der ersten Seite 12 gegenüber liegt. Die gesamte Oberfläche des Fluggeräts 10 wird durch die beiden Seiten 12 und 14 gebildet. Die Turbinenöffnungen 14, 16 und die Schächte 20, 24, 26 und damit alle Öffnungen sind dabei auf der ersten Seite 12 angeordnet.

Auf der zweiten Seite 30 befinden sich keine Turbinenöffnungen oder Schächte. Die zweite Seite 30 weist insbesondere keine Öffnungen auf sondern hat eine vollständig ungestörte, glatte Oberfläche, die eine sehr geringe Radarsignatur aufweist. Die geringe Radarsignatur der zweiten Seite 30, die durch deren Geometrie bestimmt ist, kann durch eine entsprechende Beschichtung noch weiter verringert werden. Insbesondere kann sie wesentlich geringer als die Radarsignatur der ersten Seite 12 gemacht werden. Wie aus der Fig. 3 hervorgeht, hat die zweite Seite 30 eine leicht zur Mitte hin gewölbte Oberfläche.

In den Figuren ist ein unbemanntes Fluggerät 10 dargestellt, das als Nurflügler ausgeführt ist. Es ist jedoch auch möglich, dass ein ähnliches bemanntes Fluggerät eine derartige Konfiguration von Turbinenöffnungen 14, 16 und Schächten 20, 24, 26 aufweist. In diesem Fall könnte ein Cockpit 32 beispielsweise auch auf der ersten Seite 12 angeordnet sein.

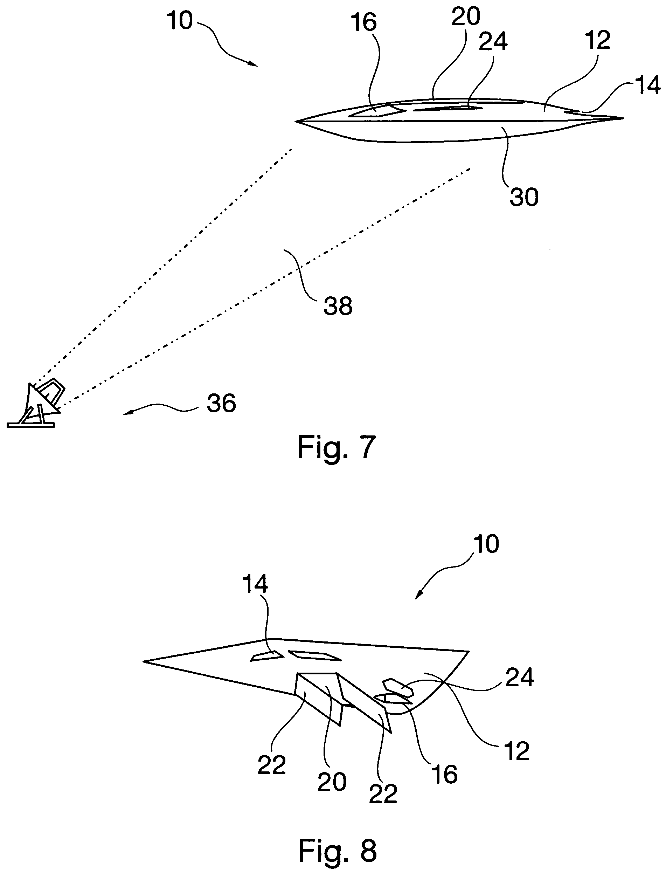

In den Fig. 1 bis 4 sowie in der Fig. 7 ist das Fluggerät in einer Reisefluglage dargestellt, bei der die erste Seite 12 nach oben und die zweite Seite 30 nach unten weist. Bei einem bemannten Fluggerät können die Oberseite und die Unterseite des Fluggeräts über die Orientierung des Piloten definiert werden. Damit kann die erste Seite 12 eine Oberseite des Fluggeräts 10 und die zweite Seite 30 eine Unterseite des Fluggeräts 10 sein.

In den Fig. 5 bis 7 ist der Betrieb des Fluggeräts 10 dargestellt.

In der Fig. 5 ist das Fluggerät 10 am Boden dargestellt. Die Fahrwerksklappen 28 sind geöffnet und das Fahrwerk 34 ausgefahren. Die erste Seite 12 weist nach unten. Die zweite Seite 30 weist nach oben.

In der Fig. 6 ist das Fluggerät 10 beim Starten dargestellt. Auch beim Starten weist die erste Seite 12 nach unten. Nach dem Start wird das Fahrwerk 34 in die Fahrwerksschächte 24, 26 eingezogen und das Fluggerät 10 wechselt in eine Fluglage, bei der die zweite Seite 30 in Richtung einer Bedrohung weist.

Eine derartige Bedrohung in Form einer Radaranlage 36 ist in der Fig. 7 dargestellt. Da sich die Radaranlage 36 am Boden und das Fluggerät 10 in der Luft befindet, kommt die Bedrohung von unten und die zweite Seite 30 weist nach unten. Aus Blickrichtung der Radaranlage 36 ist lediglich die zweite Seite 30 des Fluggeräts 10 zu sehen. Radarstrahlen 38, die von der Radaranlage 36 in Richtung des Fluggeräts abgesendet werden, treffen lediglich auf die zweite, hochgradig getarnte Seite 30 und werden von dieser absorbiert oder von der Radaranlage 36 weggestreut.

Um zum Beispielsweise eine Waffe auf die Bedrohung 36 abfallen zu lassen oder abzufeuern, wechselt das Fluggerät 10 in eine Fluglage, so wie es in der Fig. 8 dargestellt ist. In dieser Fluglage zeigt die erste Seite 12 in Richtung der Bedrohung 36. In dieser Fluglage kann der Nutzlastschacht 20 geöffnet werden und die Nutzlast in Form einer Bombe oder Rakete abgeworfen werden. Anschließend wird der Nutzlastschacht 20 wieder geschlossen. In dieser Fluglage kann das Fluggerät 10 zwar besser detektiert werden. Es muss sich aber nur kurze Zeit in dieser Fluglage befinden.

Nach der Benutzung des Nutzlastschachts 20 wechselt das Fluggerät 10 wieder in eine Fluglage, so wie sie in der Fig. 7 dargestellt ist. Nach dem Heimflug wechselt das Fluggerät 10 wieder in die in der Fig. 6 dargestellten Fluglage, fährt das Fahrwerk 28 aus und landet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Fluggerät
- 12: erste Seite
- 14: Düsenöffnung
- 16: Lufteinlauf
- 18: Turbine
- 20: Nutzlastschacht
- 22: Klappe
- 24: Hauptfahrwerksschacht
- 26: Bugfahrwerksschacht
- 28: Klappe
- 30: zweite Seite
- 32: Cockpit
- 34: Fahrwerk
- 36: Radaranlage
- 38: Radarstrahlen

## Patentansprüche

1. Fluggerät (10), umfassend:
wenigstens eine Turbine (18) zum Antrieb des Fluggeräts (10) mit wenigstens einer Turbinenöffnung (14, 16),
wenigstens einen Schacht (20, 24, 26), durch den weitere Komponenten des Fluggeräts (10) in das Innere des Fluggeräts (10) verbringbar sind,
wobei das Fluggerät (10) derart ausgeführt ist, dass es eine geringe Radarsignatur aufweist,
wobei die wenigstens eine Turbinenöffnung (14, 16) und der wenigstens eine Schacht (20, 24, 26) auf einer ersten Seite (12) des Fluggeräts (10) angeordnet sind,
wobei eine zweite Seite (30) des Fluggeräts (10), die der ersten Seite (12) gegenüberliegt, derart ausgeführt ist, dass sie eine geringere Radarsignatur als die erste Seite (12) aufweist;
**dadurch gekennzeichnet, dass**
die zweite Seite (30) keine Schächte aufweist.

2. Fluggerät (10) nach Anspruch 1,
wobei die zweite Seite (30) eine im Wesentlichen ungestörte Oberfläche aufweist.

3. Fluggerät (10) nach Anspruch 1 oder 2,
wobei die erste Seite (12) alle Schächte und Öffnungen aufweist.

4. Fluggerät (10) nach einem der vorhergehenden Ansprüche, KK:ANS
wobei der wenigstens eine Schacht mit einer Klappe (22, 28) verschließbar ist.

5. Fluggerät (10) nach einem der vorhergehenden Ansprüche,
wobei die erste Seite (12) eine Oberseite des Fluggeräts ist,
wobei die zweite Seite (30) eine Unterseite des Fluggeräts ist.

6. Fluggerät (10) nach einem der vorhergehenden Ansprüche,
wobei das Fluggerät (10) dazu ausgeführt ist, bevorzugt in einer Fluglage zu fliegen, bei der die zweite Seite (30) in eine Hauptbedrohungsrichtung (36) ausgerichtet ist.

7. Fluggerät (10) nach einem der vorhergehenden Ansprüche,
wobei ein Schacht ein Fahrwerksschacht (24, 26) ist.

8. Fluggerät (10) nach einem der vorhergehenden Ansprüche,
wobei ein Schacht ein Nutzlastschacht (20) ist.

9. Fluggerät (10) nach einem der vorhergehenden Ansprüche,
wobei aus einer Blickrichtung lediglich die zweite Seite (30) des Fluggeräts erfasst werden kann.

10. Fluggerät nach einem der vorhergehenden Ansprüche, weiter umfassend:
ein Cockpit (32),
wobei das Cockpit an der ersten Seite angeordnet ist.

11. Fluggerät (10) nach einem der vorhergehenden Ansprüche,
wobei das Fluggerät zum unbemannten Betrieb ausgeführt ist

12. Fluggerät (10) nach einem der vorhergehenden Ansprüche,
wobei das Fluggerät als Nurflügler ausgeführt ist.

13. Verfahren zum Betrieb eines Fluggeräts (10) nach einem der vorhergehenden Ansprüche, das Verfahren umfassend die Schritte:
Fliegen in einer Fluglage, in der eine zweite Seite (30) des Fluggeräts in Richtung einer Bedrohung (36) weist, wobei die zweite Seite (30) einer ersten Seite (12) des Fluggeräts gegenüberliegt, an der Düsenöffnungen (14, 16) und ein Nutzlastschacht (20) des Fluggeräts angebracht sind;
Wechseln in eine Fluglage, in der die erste Seite (12) in Richtung der Bedrohung weist;
Öffnen des Nutzlastschachts (20);
Abwerfen einer Nutzlast aus dem Nutzlastschacht (20);
Schließen des Nutzlastschachts (20).

14. Verfahren nach Anspruch 13, weiter umfassend die Schritte:
Starten in der Fluglage, in der die erste Seite (12) nach unten weist;
Einziehen eines Fahrwerks (34) in einen Fahrwerksschacht (24, 26), der an der ersten Seite (12) angebracht ist;
Wechseln in die Fluglage, in der die zweite Seite (30) in Richtung der Bedrohung (36) weist;
Wechseln in die Fluglage, in der die erste Seite (12) nach unten weist;
Ausfahren des Fahrwerks (34);
Landen in der Fluglage, in der die erste Seite (12) nach unten weist.

## Claims

1. An aerial vehicle (10), comprising:
at least one turbine (18) configured to propel the aerial vehicle, the at least one turbine comprising at least one turbine opening (14, 16),
at least one bay (20, 24, 26) configured to accommodate additional components of the aerial vehicle (10) inside the aerial vehicle (10),
wherein the aerial vehicle (10) is configured to have a low radar signature,
wherein the at least one turbine opening (14, 16) and the at least one bay (20, 24, 26) are arranged on a first side (12) of the aerial vehicle (10),
wherein a second side (30) of the aerial vehicle (10), being opposite to the first side (12), is configured to have a smaller radar signature than the first side (12).

2. The aerial vehicle (10) according to claim 1, wherein the second side (30) has an essentially undisturbed surface.

3. The aerial vehicle (10) according to claim 1 or 2, wherein the first side (12) comprises all bays and openings.

4. The aerial vehicle (10) according to one of the preceding claims, wherein the at least one bay is closable by a flap (22, 28).

5. The aerial vehicle (10) according to one of the preceding claims, wherein the first side (12) is a top side of the aerial vehicle and wherein the second side (30) is a bottom side of the aerial vehicle.

6. The aerial vehicle (10) according to one of the preceding claims, wherein the aerial vehicle (10) is configured to preferably fly in a flight attitude in which the second side (30) is oriented in a main threat direction (36).

7. The aerial vehicle (10) according to one of the preceding claims, wherein a bay is a landing gear bay (24, 26).

8. The aerial vehicle (10) according to one of the preceding claims, wherein a bay is a payload bay (20).

9. The aerial vehicle (10) according to one of the preceding claims, wherein from one viewing direction only the second side (30) of the aerial vehicle can be detected.

10. The aerial vehicle (10) according to one of the preceding claims, further comprising:
a cockpit (32),
wherein the cockpit is arranged on the first side.

11. The aerial vehicle (10) according to one of the preceding claims, wherein the aerial vehicle is configured for unmanned operation.

12. The aerial vehicle (10) according to one of the preceding claims, wherein the aerial vehicle is configured as a flying wing.

13. A method of operating an aerial vehicle (10) according to one of the preceding claims, the method comprising the steps of:
flying the aerial vehicle in a flight attitude in which a second side (30) of the aerial vehicle faces in a direction of a threat (36), wherein the second side (30) is opposite a first side (12) of the aerial vehicle on which nozzle openings (14, 16) and a payload bay (20) of the aerial vehicle are attached;
switching to a flight attitude in which the first side (12) faces the threat;
opening the payload bay (20);
releasing a payload from the payload bay (20);
closing the payload bay (20).

14. Method according to claim 13, further comprising the steps:
taking off in a flight attitude in which the first side (12) faces down;
retracting a landing gear (34) into a landing gear bay (24, 26) that is attached on the first side (12);
switching to the flight attitude in which the second side (30) faces the direction of the threat;
switching to the flight attitude in which the first side (12) faces down;
extending the landing gear (34); and
landing in the flight attitude in which the first side (12) faces down.

## Revendications

1. Aéronef (10), comprenant :
au moins une turbine (18) destinée à entraîner l'aéronef (10) et comportant au moins une ouverture de turbine (14, 16),
au moins un puits (20, 24, 26), à travers lequel d'autres éléments de l'aéronef (10) peuvent être transférés à l'intérieur de l'aéronef (10),
dans lequel l'aéronef (10) est réalisé de telle sorte qu'il présente une signature radar faible,
dans lequel ladite moins une ouverture de turbine (14, 16) et ledit au moins un puits (20, 24, 26) sont disposés sur une première face (12) de l'aéronef (10),
dans lequel une seconde face (30) de l'aéronef (10), qui est opposée à la première face (12), est réalisée de telle sorte qu'elle présente une signature radar plus faible que la première face (12) ;
**caractérisé en ce que**
la seconde face (30) ne présente pas de puits.

2. Aéronef (10) selon la revendication 1,
dans lequel la seconde face (30) présente une surface sensiblement non brouillée.

3. Aéronef (10) selon la revendication 1 ou 2,
dans lequel la première face (12) présente tous les puits et toutes les ouvertures.

4. Aéronef (10) selon une des revendications précédentes,
dans lequel l'au moins un puits peut être fermé avec un volet (22, 28).

5. Aéronef (10) selon une des revendications précédentes,
dans lequel la première face (12) est une face supérieure de l'aéronef,
dans lequel la seconde face (30) est une face inférieure de l'aéronef.

6. Aéronef (10) selon une des revendications précédentes,
dans lequel l'aéronef (10) est réalisé de manière à voler de préférence dans une attitude de vol dans laquelle la seconde face (30) est orientée dans la direction d'une menace principale (36).

7. Aéronef (10) selon une des revendications précédentes,
dans lequel un puits est un puits de train d'atterrissage (24, 26).

8. Aéronef (10) selon une des revendications précédentes,
dans lequel un puits est un puits de charge utile (20).

9. Aéronef (10) selon une des revendications précédentes,
dans lequel seule la seconde face (30) de l'aéronef peut être perçue à partir d'une ligne de visée.

10. Aéronef selon une des revendications précédentes, comprenant en outre :
un cockpit (32),
dans lequel le cockpit est disposé sur la première face.

11. Aéronef (10) selon une des revendications précédentes,
dans lequel l'aéronef est réalisé pour fonctionner sans pilote.

12. Aéronef (10) selon une des revendications précédentes,
dans lequel l'aéronef est configuré sous la forme d'une aile volante.

13. Procédé de fonctionnement d'un aéronef (10) selon une des revendications précédentes, procédé comprenant les étapes consistant à :
voler dans une attitude de vol dans laquelle une seconde face (30) de l'aéronef est tournée en direction d'une menace (36), la seconde face (30) étant opposée à une première face (12) de l'aéronef sur laquelle des ouvertures de buse (14, 16) et un puits de charge utile (20) de l'aéronef sont rapportées ;
passer dans une attitude de vol dans laquelle la première face (12) est tournée en direction de la menace ;
ouvrir le puits de charge utile (20) ;
larguer une charge utile depuis le puits de charge utile (20) ;
fermer le puits de charge utile (20).

14. Procédé selon la revendication 13, comprenant en outre les étapes consistant à :
décoller dans l'attitude de vol dans laquelle la première face (12) est tournée vers le bas ;
rentrer un train d'atterrissage (34) dans un puits de train d'atterrissage (24, 26) qui est rapporté sur la première face (12) ;
passer dans l'attitude de vol dans laquelle la seconde face (30) est tournée en direction de la menace (36) ;
passer dans l'attitude de vol dans laquelle la première face (12) est tournée vers le bas ;
sortir le train d'atterrissage (34) ;
atterrir dans l'attitude de vol dans laquelle la première face (12) est tournée vers le bas.
